# EUROPÄISCHE PATENTSCHRIFT

(11) **EP 0 410 523 B1**
(45) Veröffentlichungstag und Bekanntmachung des Hinweises auf die Patenterteilung: **14.12.1994**
(21) Anmeldenummer: 90201977.7
(22) Anmeldetag: 20.07.1990
(51) Int. Cl.: H04N 5/12

(54) **Synchronisieranordnung für ein Bildwiedergabegerät**
Synchronising device for a picture reproducing apparatus
Dispositif de synchronisation pour un appareil de reproduction d'images

(30) Priorität: 26.07.1989 DE 3924686
(43) Veröffentlichungstag der Anmeldung: 30.01.1991
(73) Patentinhaber: Philips Patentverwaltung GmbH, 22335 Hamburg (DE); Philips Electronics N.V., 5621 BA Eindhoven (NL)
(72) Erfinder: Pletz-Kirsch, Gerhard, D-2000 Hamburg 62 (DE); Lenth, Jürgen, D-2000 Hamburg 54 (DE)
(74) Vertreter: von Laue, Hanns-Ulrich, Dipl.-Ing.

(56) Entgegenhaltungen:
- US-A- 4 677 484

## Beschreibung

Die Erfindung betrifft eine Synchronisieranordnung für ein Bildwiedergabegerät mit einer Synchronsignal-Trennstufe, in der Horizontalsynchron-Pulse aus einem der Synchronisieranordnung zugeführten, ein Horizontalsynchron-Gemisch enthaltenden Fernsehsignal gewonnen werden, und einer Horizontalsynchron-Schaltung, insbesondere einem Phasenregelkreis, der Horizontalsynchron-Pulse zur Synchronisierung zugeführt sind.

Bei derartigen Synchronisieranordnungen, welche in der Regel dazu dienen, die Ablenkeinheit eines Bildwiedergabegerätes synchron zu dem empfangenen Fernsehsignal zu steuern, besteht das Problem, daß bei verrauschtem Fernsehsignal oder bei fehlendem Fernsehsignal die Horizontalsynchron-Schaltung, insbesondere ein meist vorgesehener Phasenregelkreis, innerhalb seines Ziehbereiches hin und her läuft, d.h. als kein in seiner Frequenz konstantes Horizontalsynchron-Signal liefert. Dies führt dazu, daß stabile Bildeinblendungen dann nicht mehr möglich sind bzw. daß das mit Rauschen überlagerte Fernsehbild zusätzlich noch durch mangelhafte Synchronisation gestört wird.

Aus der europäischen Patentschrift EP-A-0 135 236 ist eine Bildwiedergabeanordnung mit einer Vertikal-Synchron-Schaltung bekannt, bei der eine Zähleranordnung vorgesehen ist, die in einem festgelegten Zeitraum die Anzahl Male zählt, in der das verstärkte mit Rauschen überlagerte Signal einen vorbestimmten Wert überschreitet. Geschieht dies zu häufig, wird die Betriebsart bestimmter Stufen der Bildwiedergabeanordnung umgeschaltet. Insbesondere wird die Empfindlichkeit einer PLL umgeschaltet, die die Vertikal-Synchron-Signale für eine Ablenkeinheit liefert. Bei dieser Anordnung ist jedoch Voraussetzung, daß trotz des vorhandenen Rauschens die Synchronisierimpulse noch einwandfrei identifiziert werden können. Ist dies nicht mehr der Fall, so kann auch dort der Phasenregelkreis nicht mehr korrekt arbeiten und es treten die oben beschriebenen Probleme auf.

Aus der US-A-4 677 484 ist eine Stabilisierungsschaltung für ein On-Screen Display bekannt, bei welchem eine Horizontalsynchron-Schaltung, welche eine PLL aufweist, bei Ausfall oder Ungültigkeit der Horizontalsynchron-Pulse auf einen freilaufenden Modus umgeschaltet wird, um ein On-Screen Display zu ermöglichen. Dazu wird ein Detektor verwendet, welcher die Gültigkeit der Synchronimpulse untersucht.

Es ist Aufgabe der Erfindung, eine Synchronisieranordnung zu schaffen, welche auch bei stark verrauschtem oder nicht vorhandenem Fernsehsignal ein Synchronsignal konstanter Frequenz liefert.

Diese Aufgabe ist erfindungsgemäß dadurch gelöst, daß bei Vorliegen eines Umschaltkriteriums, das erfüllt ist, wenn eine wählbare Zahl von Horizontalsynchron-Pulsen pro Bildzeile überschritten wird oder wenn kein Horizontalsynchron-Puls pro Bildzeile auftritt, die Horizontalsynchron-Schaltung nach einer ersten wählbaren Zahl von Bildzeilen auf eine feste Nennfrequenz umgeschaltet wird und daß bei nicht mehr erfülltem Umschaltkriterium die Horizontalsynchron-Schaltung nach einer zweiten wählbaren Zahl von Bildzeilen wieder auf Synchronisierung mittels der Horizontalsynchron-Pulse umgeschaltet wird.

Aus dem empfangenen Fernsehsignal, das ein Horizontalsynchron-Gemisch enthält (neben einem außerdem vorhandenen Vertikalsynchron-Gemisch) werden in bekannter Weise in einer Synchronsignal-Trennstufe die Horizontalsynchron-Pulse abgeleitet. Dies geschieht meist in der Weise, daß das Horizontalsynchron-Gemisch in der Trennstufe mit einem Schneidepegel verglichen wird. Während der Zeit, in der der Schneidepegel überschritten wird, kann dann entweder direkt ein Horizontalsynchron-Puls erzeugt werden oder es kann noch eine zusätzliche Zeitverzögerung vorgesehen sein, nach der der Horizontalsynchron-Puls erzeugt wird.

Die auf diese Weise erzeugten Synchronpulse werden einer Horizontalsynchron-Schaltung zugeführt, die mittels der Pulse synchronisiert wird. Bei derartigen Schaltungen handelt es sich meist um einen Phasenregelkreis, dessen Phasenkomparator einerseits das Signal des Phasenregelkreises und andererseits die Horizontalsynchron-Pulse zur Synchronisierung zugeführt sind. Der Phasenregelkreis wird dann auf die Horizontalsynchron-Pulse aufsynchronisiert.

Es liegt auf der Hand, daß der Phasenregelkreis nur dann in gewünschter Weise arbeiten kann, wenn tatsächlich nur zu den vorgegebenen Zeitpunkten ein Horizontalsynchron-Puls erzeugt wird, d.h. also nur genau ein Puls pro Bildzeile. Ist das empfangene Fernsehsignal jedoch verrauscht oder wird kein Fernsehsignal empfangen, so werden in der Synchronsignaltrennstufe während der Zeit einer Bildzeile unter Umständen mehrere oder keine Horizontalsynchron-Pulse erzeugt, was dann dazu führt, daß die Horizontalsynchron-Schaltung nicht mehr richtig aufsynchronisiert.

Bei der erfindungsgemäßen Synchronisieranordnung werden diese Nachteile dadurch vermieden, daß die Horizontalsynchron-Schaltung bei Vorliegen eines Umschaltkriteriums auf ihre Nennfrequenz umgeschaltet wird, d.h. also ein festes Horizontalsynchron-Signal liefert, welches von den eventuell noch erkannten und möglicherweise falschen Horizontalsynchron-Pulsen unabhängig ist. Als Umschaltkriterium ist dabei vorgesehen, daß während der Dauer einer Bildzeile eine vorgebbare Zahl von Horizontalsynchron-Pulsen nicht überschritten werden darf, bzw. daß kein Horizontalsynchron-Puls pro Bildzeile detektiert wird. Ist das Umschaltkriterium erfüllt, wird die oben beschriebene Umschaltung der Horizontalsynchron-Schaltung vorgenommen. Es ist dann selbst bei nicht mehr vorhandenem Fernsehsignal möglich, Schrifteinblendungen oder ähnliches vorzunehmen.

Ist das Umschaltkriterium nicht mehr erfüllt, so wird die Horizontalsynchron-Schaltung nach einer wählbaren Zahl von Bildzeilen wieder auf die Synchronisierung mittels der Horizontalsynchron-Pulse umgeschaltet. Bei Vorliegen eines nicht zu stark verrauschten Bildes wird auf diese Weise wieder die Synchronisation mittels der Horizontalsynchron-Pulse, die aus dem empfangenen Fernsehsignal abgeleitet werden, vorgenommen.

Nach einer weiteren Ausgestaltung der Erfindung ist vorgesehen, daß die zweite wählbare Zahl von Bildzeilen die Summe aus der ersten wählbaren Zahl von Bildzeilen und.derjenigen Zahl von Bildzeilen ist, während der nach Umschalten auf die feste Nennfrequenz und nach Erreichen der ersten wählbaren Zahl von Bildzeilen das Umschaltkriterium gegebenenfalls noch erfüllt war.

Die zweite wählbare Zahl von Bildzeilen, d.h. also diejenige Zahl von Bildzeilen nach der bei nicht mehr erfülltem Umschaltkriterium die Rückschaltung auf die Synchronisierung mittels der Horizontalsynchron-Pulse vorgenommen wird, kann vorteilhafter Weise davon abhängig gemacht werden, während wie vieler Bildzeilen nach Erreichen der ersten wählbaren Zahl, d.h. also nach dem Umschalten der Horizontalsynchron-Schaltung auf ihre Nennfrequenz, die vorgegebene Zahl von Horizontalsynchron-Pulsen pro Bildzeile überschritten wurde bzw. keine Horizontalsynchron-Pulse detektiert wurden. Dies geschieht in der Weise, daß nach Erreichen der ersten wählbaren Zahl diejenigen Bildzeilen gezählt werden, während der das Umschaltkriterium noch erfüllt war. Ab dem Zeitpunkt, in dem das Umschaltkriterium nicht mehr erfüllt ist, wird dann für die gleiche Zahl von Bildzeilen plus der ersten wählbaren Zahl von Bildzeilen die Horizontalsynchron-Schaltung auf ihre Nennfrequenz geschaltet. Erst anschließend wird die Horizontalsynchron-Schaltung wieder mittels der Horizontalsynchron-Pulse synchronisiert. Auf diese Weise wird abhängig davon, wie lange das Fernsehsignal verrauscht bzw. nicht vorhanden war, die Rückschaltung auf die Synchronisierung eines nunmehr vorhandenen bzw. nicht mehr verrauschten Fernsehsignals vorgenommen.

Nach einer weiteren Ausgestaltung der Erfindung ist vorgesehen, daß die zweite wählbare Zahl auf einen vorgebbaren Maximalwert begrenzt ist. Sollte für längere Zeit ein verrauschtes Fernsehsignal empfangen werden, für das das Umschaltkriterium erfüllt ist, so sollte die Rückschaltung nicht entsprechend lange dauern. Aus diesem Grunde ist die zweite wählbare Zahl vorteilhafterweise auf einen vorgebbaren Maximalwert begrenzt, so daß auch die Zeit, nach der die Synchronisierung wieder von dem empfangenen Fernsehsignal abgeleitet wird, begrenzt ist.

Nach einer weiteren Ausgestaltung der Erfindung ist vorgesehen, daß die Anordnung einen ersten Zähler aufweist, welcher die Anzahl von Horizontalsynchron-Pulsen pro Bildzeile zählt und der bei Erfüllung des Umschaltkriteriums ein entsprechendes Signal an einen zweiten, mit dem Ausgangssignal des Phasenregelkreises getakteten Zähler liefert, der bei erfülltem Umschaltkriterium ausgehend von einer Ausgangsstellung die Bildzeilen zählt und bei Erreichen der ersten wählbaren Zahl von Bildzeilen die Umschaltung der Horizontalsynchron-Schaltung auf die Nennfrequenz auslöst.

Es ist ein erster Zähler vorgesehen, welcher dazu dient, festzustellen, wieviele Horizontalsynchron-Pulse pro Bildzeile detektiert wurden. Wird dabei eine vorgegebene Anzahl von Pulsen innerhalb einer Zeile überschritten oder wird kein Horizontal-Puls detektiert, so ist das Umschaltkriterium erfüllt und es wird ein entsprechendes Signal an einen zweiten Zähler gegeben. Für die Dauer, in der dieses Signal an den zweiten Zähler gegeben wird, zählt dieser Zähler, der mit dem Ausgangssignal des Phasenregelkreises getaktet ist, ausgehend von einer Ausgangsstellung die Bildzeilen. Erreicht der zweite Zähler dabei die erste wählbare Zahl von Bildzeilen, so löst er die Umschaltung der Horizontalsynchron-Schaltung auf die Nennfrequenz aus. Es wird also erst nach Erreichen der ersten wählbaren Zahl von Bildzeilen die Umschaltung vorgenommen, damit nicht schon bei gestörten einzelnen Bildzeilen eine Umschaltung erfolgt.

Für das oben Beschriebene ist zu beachten, daß während der gesamten Zeit das Umschaltkriterium erfüllt sein muß. Ist das Umschaltkriterium auch nur vorübergehend nicht erfüllt, so wird der Zähler wieder auf seine Ausgangsstellung zurückgesetzt und bei erfülltem Umschaltkriterium wird von dieser Ausgangsstellung neu gezählt. Es muß also für die Dauer der ersten wählbaren Zahl von Bildzeilen ununterbrochen das Umschaltkriterium erfüllt sein, damit die oben beschriebene Umschaltung erfolgt. Damit ist sichergestellt, daß die Umschaltung nur erfolgt, wenn das Fernsehsignal dauerhaft verrauscht oder nicht vorhanden ist. Kurzzeitige Störungen für die Dauer einiger Bildzeilen bleiben ohne Auswirkung.

Nach einer weiteren Ausgestaltung der Erfindung ist vorgesehen, daß der zweite Zähler nur bis zu dem Maximalwert zählt und daß er bei nicht mehr erfülltem Umschaltkriterium wieder bis zu seiner Ausgangsstellung zurückzählt und bei Erreichen dieser die Rückschaltung der Horizontalsynchron-Pulse auf die Horizontalsynchron-Schaltung auslöst.

In dem Fall, daß das Umschaltkriterium ausreichend lange vorhanden war und die erste wählbare Zahl erreicht wurde, d.h. also die Umschaltung der Horizontalsynchron-Schaltung auf die Nennfrequenz vorgenommen wurde, zählt der zweite Zähler ausgehend von diesem Zeitpunkt weiter bis zu einem Maximalwert. Ist das Umschaltkriterium nicht mehr erfüllt, so zählt der Zähler ausgehend von diesem Maximalwert zurück bis zu seiner Ausgangsstellung. Erst bei Erreichen dieser Ausgangsstellung wird die Horizontalsynchron-Schaltung wieder auf Synchronisierung mittels der Horizontalsynchron-Pulse zurückgeschaltet.

Sollte nach Erreichen der ersten wählbaren Zahl das Umschaltkriterium noch für einige Zeilen vorhanden sein, der Maximalwert jedoch nicht erreicht werden, so wird in diesem Falle ausgehend von dem erreichten Wert bis zur Ausgangsstellung zurückgezählt. In diesem Falle wird die Horizontalsynchron-Schaltung also eher wieder auf Synchronisierung mittels der Horizontalsynchron-Pulse zurückgeschaltet als in dem oben beschriebenen Fall, in dem der zweite Zähler seinen Maximalwert erreicht hatte. Es wird damit erreicht, daß das Rückschalten der Horizontalsynchron-Schaltung auf die Synchronisierung mittels der Horizontalsynchron-Pulse davon abhängig gemacht wird, wie lange das Umschaltkriterium erfüllt war. Weitere numerische Ausgestaltungen der Erfindung sind in den abhängigen Ansprüchen 3 bis 5 offenbart.

Anhand der Zeichnung wird ein Ausführungsbeispiel der Erfindung näher erläutert. Es zeigen:
Fig. 1 das detaillierte Blockschaltbild einer Synchronisieranordnung,
Fig. 2 und 3 Signaldiagramme der in der Fig. 1 dargestellten Synchronisieranordnung.

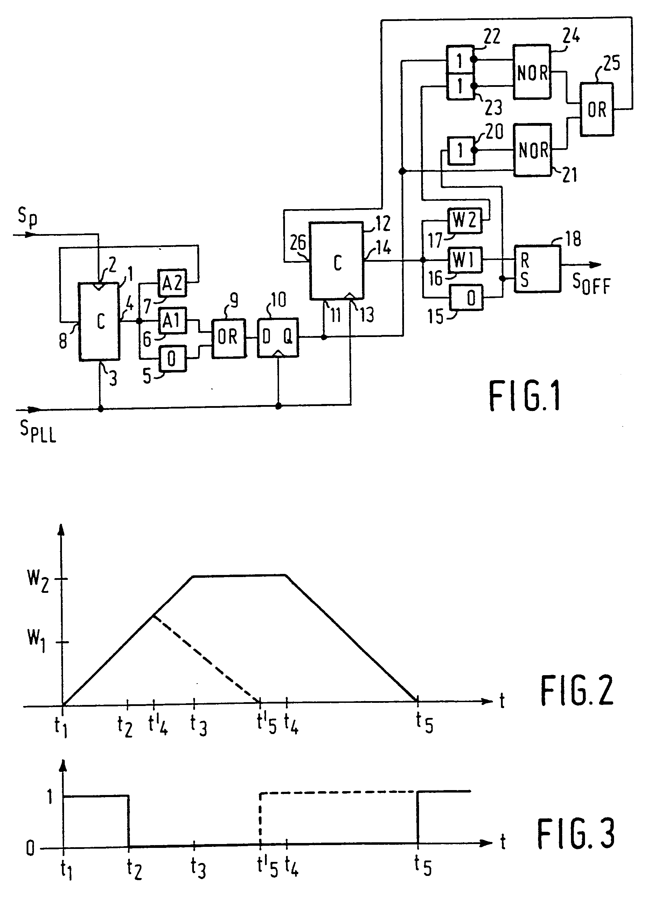

Eine in Fig. 1 dargestellte Synchronisieranordnung für ein Bildwiedergabegerät dient der Steuerung einer in der Figur nicht dargestellten Horizontalsynchron-Schaltung, welche insbesondere ein Phasenregelkreis (PLL) sein kann.

Der in der Figur dargestellten Synchronisieranordnung ist von einer ebenfalls in der Figur nicht dargestellten Synchronsignaltrennstufe ein Signal S_{P} zugeführt. Bei diesem Signal handelt es sich um die Horizontalsynchron-Pulse, die in der Synchronsignal-Trennstufe aus dem Horizontalsynchron-Gemisch des Fernsehsignals gewonnen wurden. Dies kann z.B. in der eingangs beschriebenen, bekannten Weise geschehen.

Die in Fig. 1 dargestellte Synchronisieranordnung weist einen ersten Zähler 1 auf, dessen Takteingang 2 das Signal S_{P} der in der Figur nicht dargestellten Synchronsignal-Trennstufe zugeführt ist. Einem Rücksetz-Eingang 3 des Zählers 1 ist ein Signal S_{PLL} zugeführt, daß das Ausgangssignal einer in der Figur nicht dargestellten Horizontalsynchron-Schaltung, die als Phasenregelkreis aufgebaut ist, darstellt. Das an einem Ausgang 4 des Zählers 1 anliegende Signal ist drei Komparatoren 5, 6 und 7 zugeführt. Der Komparator 5 vergleicht das Ausgangssignal des Zählers 1 auf Identität mit dem Wert Null, der Komparator 6 auf Identität mit einem vorgegebenen Wert A1 und der Komparator 7 auf Identität mit einem vorgebenen Wert A2. Das Ausgangssignal des Komparators 7 ist auf einen ENABLE-Eingang 8 des Zählers 1 zurückgeführt.

Die Ausgangssignale der Komparatoren 5 und 6 sind einem ODER-Gatter 9 zugeführt, dessen Ausgangssignal auf ein D-Flip-Flop 10 geführt ist. Das D-Flip-Flop 10 ist ebenfalls mittels des Signals S_{PLL} getaktet. Das Ausgangssignal des D-Flip-Flops ist auf einen Eingang 11 eines zweiten Zählers 12 geführt. Mittels des an diesem Eingang 11 anliegenden Signals wird die Zählrichtung des Zählers 12 umgeschaltet. Einem Takt-Eingang 13 des Zählers 12 ist das Signal S_{PLL} des in der Figur nicht dargestellten Phasenregelkreises zugeführt.

Das an einem Ausgang 14 des Zählers 12 anliegende Ausgangssignal ist drei Komparatoren 15, 16 und 17 zugeführt. Der Komparator 15 vergleicht das an dem Ausgang 14 des Zählers 12 anliegende Ausgangssignal auf Identität mit dem Wert Null, der Komparator 16 auf Identität mit einer ersten wählbaren Zahl W1 und der Komparator 17 auf Identität mit einer zweiten wählbaren Zahl W2. Das Ausgangssignal des Komparators 16 ist auf den R-Eingang eines RS-Flip-Flops 18 geführt, dessen Ausgangssignal ein Steuersignal S_{off} liefert, daß der Umschaltung einer in der Figur nicht dargestellten Horizontalsynchron-Schaltung, insbesondere eines Phasenregelkreises, dient.

Das Ausgangssignal des Komparators 15 ist auf den S-Eingang des Flip-Flop-Eingangs 18 geführt. Ferner ist das Ausgangssignal des Komparators 15 einem Inverter 20 zugeführt, dessen Ausgangssignal auf einen Eingang eines Nicht-ODER-Gatters 21 geführt ist. Auf den anderen Eingang dieses Gatters ist das Ausgangssignal des D-Flip-Flops 10 geführt, das außerdem einem Inverter 22 zugeführt ist. Einem weiteren Inverter 23 ist das Ausgangssignal des Komparators 17 zugeführt. Die Ausgangssignale der beiden Inverter 22 und 23 sind auf zwei Eingänge eines NICHT-ODER-Gliedes 24 geführt. Die Ausgangssignale der NICHT-ODER-Glieder 21 und 24 sind einem ODER-Gatter 25 zugeführt, dessen Ausgangssignal auf einen ENABLE-Eingang 26 des Zählers 12 geführt ist.

Der Zähler 1 dient zusammen mit den Komparatoren 5, 6 und 7 dazu, festzustellen, wie viele Horizontalsynchron-Pulse pro Bildzeile auftreten. Als Kriterium für die Dauer einer Bildzeile dient dabei das Signal S_{PLL}, daß das Ausgangssignal einer in der Figur nicht dargestellten Horizontalsynchron-Schaltung, insbesondere eines Phasenregelkreises, darstellt. Dieser Phasenregelkreis liefert einen Impuls während der Dauer einer Bildzeile. Wie weiter unten noch genauer darzulegen sein wird, ist dies auch dann der Fall, wenn das empfangene Fernsehsignal gestört ist oder gar kein Fernsehsignal empfangen wird.

Wird während der Dauer einer Bildzeile kein Horizontalsynchron-Puls erzeugt, so erhält der Zähler an seinem Eingang 2 keinen Taktimpuls und bleibt also auf seinem Anfangswert Null stehen. Es liefert dann der Komparator 5 ein entsprechendes Ausgangssignal an das ODER-Gatter 9. Wird dagegen mehr als ein Horizontalsynchron-Puls während der Dauer einer Bildzeile gezählt, nämlich z.B. A1-Pulse (wobei A1 größer ist als 1), so liefert der Komparator 6 ein entsprechendes Ausgangssignal. Der Wert A1 ist dabei diejenige Zahl von Horizontalsynchron-Pulsen pro Bildzeile, bei deren Überschreiten das Umschaltkriterium erfüllt ist. Es wird also sowohl in dem Fall, daß kein Horizontalsynchron-Puls pro Bildzeile gezählt wird, wie auch in dem Fall, daß A1 oder mehr Pulse pro Bildzeile gezählt werden, ein Signal an das ODER-Gatter 9, daß das Flip-Flop 10 setzt.

Mittels des Komparators 7, der bei Erreichen einer Zahl A2 den Zähler 1 über dessen Eingang 8 auf seine Ausgangsstellung zurücksetzt, wird erreicht, daß der Zähler nach überschreiten des Wertes A1 nicht mehr weiterzählt.

Das D-Flip-Flop 10 steuert mit seinem Ausgangssignal den zweiten Zähler 12 in der Weise, daß bei vorhandenem Ausgangssignal, d.h. also wenn entweder der Komparator 5 oder der Komparator 6 angesprochen hat, der Zähler 12 aufwärts zählt. Der Zähler 12 ist dazu mit dem Ausgangssignal des in der Figur nicht dargestellten Phasenregelkreises getaktet. Der Zähler 12 zählt also diejenige Anzahl von Bildzeilen, während derer kein oder mehr als A1 Horizontalpulse pro Bildzeile detektiert wurden. Im Normalfall, d.h. also in dem Fall, daß pro Bildzeile genau ein Horizontalsynchron-Puls erkannt wird, bleibt der Zähler in seiner Ausgangsstellung stehen, so daß der Komparator 15 ein entsprechendes Ausgangssignal an den S-Eingang des Flip-Flop 18 gibt. Das Signal S_{off} hat dann also High-Pegel. Dieses ist der Normalzustand, in dem eine in der Figur nicht dargestellte Horizontalsynchron-Schaltung mittels der Horizontalsynchron-Pulse synchronisiert wird.

Ist das Umschaltkriterium jedoch erfüllt, so zählt der Zähler infolge des dann an seinem Eingang 11 anliegenden Signals aufwärts und erreicht gegebenenfalls eine erste wählbare Zahl W1. Wird diese Zahl erreicht, so liefert der Komparator 16 ein entsprechendes Ausgangssignal an den R-Eingang des Flip-Flops 8, das daraufhin auf Low-Pegel schaltet. Das Signal S_{off} schaltet dann die in der Figur nicht dargestellte Horizontalsynchron-Schaltung auf ihre Nennfrequenz um.

Die Ausgangssignale der Komparatoren 15 und 17 werden über die Verschaltung mittels der Gatter 21, 24 und 25 dazu eingesetzt, den Zähler 12 auf ENABLE zu schalten, d.h. also nicht mehr weiterzählen zu lassen.

Im folgenden wird anhand der Fig. 2 und 3 die Wirkungsweise der in der Fig. 1 dargestellten Anordnung für zwei Beispielsfälle von verrauschten oder zeitweise nicht vorhandenen Fernsehsignalen erläutert.

Das in Fig. 2 dargestellte Diagramm zeigt schematisch das am Ausgang 14 des Zählers 12 anliegende Signal. Zu beachten ist dabei, daß das Signal tatsächlich nicht kontinuierlich sondern in Stufen erscheint.

Es wird zunächst für einen ersten Beispielsfall davon ausgegangen, daß zum Zeitpunkt t1 das Umschaltkriterium erfüllt ist. Der Zähler 12 erhält dann an seinem Eingang 12 ein entsprechendes Signal, so daß er aufwärts zählt. Dies geschieht getaktet mittels des an seinem Eingang 13 als Taktsignal zugeführten Ausgangssignals einer in der Figur nicht dargestellten Horizontalsynchron-Schaltung, welche insbesondere ein Phasenregelkreis ist. Der Zähler 12 zählt, sofern das Umschaltkriterium weiterhin erfüllt ist, zunächst bis zum Zeitpunkt t2, an dem die erste wählbare Zahl W1 erreicht ist. Zu diesem Zeitpunkt spricht der Komparator 16 an und setzt das Flip-Flop 18 zurück.

In der Figur 3 ist das Ausgangssignal S_{off} des Rs-Flip-Flops 18 dargestellt. In dem eben beschriebenen Fall, daß der Konverter 16 anspricht, wird das Flip-Flop 18 zurückgesetzt. In der Fig. 3 ist dies dadurch erkennbar, daß das Ausgangssignal zum Zeitpunkt t2 von High-Pegel auf Low-Pegel wechselt. Es wird damit zum Zeitpunkt t2 eine in der Figur nicht dargestellte Horizontalsynchron-Schaltung in der Weise umgeschaltet, daß sie nicht mehr mittels der Horizontalsychron-Pulse synchronisiert wird, sondern nunmehr mit einer festen Nennfrequenz arbeitet.

Unter der Voraussetzung, daß auch nach dem Zeitpunkt, in dem der Wert W1 erreicht ist, das Umschaltkriterium weiterhin erfüllt ist, zählt der Zähler weiter bis zum Wert W2. Ist dieser Wert erreicht, spricht der Komparator 17 an und blockiert den Zähler 12, so daß dieser nicht weiterzählt. W2 stellt also den Maximalwert dar, bis zu dem der Zähler 12 zählt. In dem in den Fig. 2 und 3 dargestellten Beispielsfall ist auch nach dem Zeitpunkt t3, in dem der Wert W2 erreicht wurde, noch für die Dauer einiger Bildzeilen das Umschaltkriterium erfüllt. Dies ist bis zum Zeitpunkt t4 der Fall. Ab dem Zeitpunkt t4 ist das Umschaltkriterium nicht mehr erfüllt. Der Zähler 12 wird nunmehr infolge des an seinem Eingang 11 anliegenden Signals auf Abwärtszählen umgeschaltet. Sofern das Umschaltkriterium nunmehr dauerhaft nicht erfüllt ist, zählt der Zähler bis zum Zeitpunkt t5 auf seinen Ausgangswert zurück. Es ist dann also der Wert Null erreicht, so daß der Komparator 15 anspricht und das Flip-Flop 18 setzt. Wie in der Fig. 3 dargestellt ist, geht daher zum Zeitpunkt t5 das Ausgangssignal des Flip-Flops 18 wieder auf High-Pegel. Dies führt dazu, daß eine nachgeschaltete Horizontalsynchron-Schaltung wieder auf Synchronisierung mittels der Horizontalsynchron-Pulse umgeschaltet wird.

In der Fig. 2 ist ein weiteres Beispiel gestrichelt angedeutet, in dem der Zähler 12 seinen Maximalwert nicht erreicht. In diesem Beispiel wird zu einem Zeitpunkt t4′, in dem der Zähler 12 den Wert W1 überschritten, den Wert W2 jedoch noch nicht erreicht hat, das Umschaltkriterium nicht mehr erfüllt. Der Zähler 12 wird daher mittels des an seinem Eingang 11 anliegenden Umschaltsignals auf Abwärtszählen umgeschaltet. Zum Zeitpuntk t5′ ist in diesem Beispielsfalle dann der Ausgangswert Null wieder erreicht, so daß das Flip-Flop 18 wieder zurückgesetzt wird, so daß zu diesem Zeitpunkt, wie auch in der Fig. 3 dargestellt, das Ausgangssignal des Flip-Flops 18 wieder von Low-Lewel auf High-Lewel wechselt. In diesem Beispielsfall wird also der Maximalwert W2 nicht erreicht, so daß der Rückzählvorgang schneller beendet ist und früher wieder auf Synchronisierung durch die Horizontalsynchron-Pulse umgeschaltet wird.

## Patentansprüche

1. Synchronisieranordnung für ein Bildwiedergabegerät mit einer Synchronsignal-Trennstufe, in der Horizontalsynchron-Pulse aus einem der Synchronisieranordnung zugeführten, ein Horizontalsynchron-Gemisch enthaltenden Fernsehsignal gewonnen werden, und einer Horizontalsynchron-Schaltung, der Horizontalsynchron-Pulse zur Synchronisierung zugeführt sind,
dadurch gekennzeichnet, daß die Synchronisieranordnung eine Synchronsignal-Trennstufe und eine Horizontalsynchron-Schaltung aufweist, die so ausgestaltet und angeordnet sind, daß bei Vorliegen eines Umschaltkriteriums, das erfüllt ist, wenn eine wählbare Zahl von Horizontalsynchron-Pulsen pro Bildzeile überschritten wird oder wenn kein Horizontalpuls pro Bildzeile auftritt, die Horizontalsynchron-Schaltung nach einer ersten wählbaren Zahl von Bildzeilen auf eine feste Nennfrequenz umgeschaltet wird und daß bei nicht mehr erfülltem Umschaltkriterium die Horizontalsynchron-Schaltung nach einer zweiten wählbaren Zahl von Bildzeilen wieder auf Synchronisierung mittels der Horizontalsynchron-Pulse umgeschaltet wird.

2. Anordnung nach Anspruch 1,
dadurch gekennzeichnet, daß die zweite wählbare Zahl von Bildzeilen die Summe aus der ersten wählbaren Zahl von Bildzeilen und derjenigen Zahl von Bildzeilen ist, während der nach Umschalten auf die feste Nennfrequenz und nach Erreichen der ersten wählbaren Zahl von Bildzeilen das Umschaltkriterium gegebenenfalls noch erfüllt war.

3. Anordnung nach Anspruch 2,
dadurch gekennzeichnet, daß die zweite wählbare Zahl auf einen vorgebbaren Maximalwert begrenzt ist.

4. Anordnung nach einem der Ansprüche 1 bis 3,
dadurch gekennzeichnet, daß die erste wählbare Zahl im Bereich 25 bis 35 Bildzeilen liegt.

5. Anordnung nach Anspruch 3,
dadurch gekennzeichnet, daß der Maximalwert im Bereich 50 bis 70 Bildzeilen liegt.

6. Anordnung nach einem der Ansprüche 1 bis 5,
dadurch gekennzeichnet, daß die vorgebbare Zahl von Horizontalsynchron-Pulsen pro Bildzeile, bei deren Überschreiten das Umschaltkriterium erfüllt ist, im Bereich 5 bis 15 liegt.

7. Anordnung nach einem der Ansprüche 1 bis 6,
dadurch gekennzeichnet, daß die Anordnung einen ersten Zähler (1) aufweist, welcher die Anzahl von Horizontalsynchron-Pulsen pro Bildzeile zählt und der bei Erfüllung des Umschaltkriteriums ein entsprechendes Signal an einen zweiten, mit dem Ausgangssignal des Phasenregelkreises getakteten Zähler (12) liefert, der bei erfülltem Umschaltkriterium ausgehend von einer Ausgangsstellung die Bildzeilen zählt und bei Erreichen der ersten wählbaren Zahl von Bildzeilen die Umschaltung der Horizontalsynchron-Schaltung auf die Nennfrequenz auslöst.

8. Anordnung nach Anspruch 3 und Anspruch 7,
dadurch gekennzeichnet, daß der zweite Zähler (12) nur bis zu dem Maximalwert zählt.

9. Anordnung nach Anspruch 7 und Anspruch 8,
dadurch gekennzeichnet, daß der zweite Zähler (12) bei nicht mehr erfülltem Umschaltkriterium wieder bis zu seiner Ausgangsstellung zurückzählt und bei Erreichen dieser die Rückschaltung der Horizontalsynchron-Pulse auf die Horizontalsynchron-Schaltung auslöst.

## Claims

1. A synchronizing arrangement for a picture display device, comprising a synchronizing signal separating stage in which horizontal synchronizing pulses are recovered from a television signal which contains a horizontal synchronizing composite signal and is applied to the synchronizing arrangement, and a horizontal synchronizing circuit to which horizontal synchronizing pulses are applied for synchronizing purposes, characterized in that the synchronizing arrangement comprises a synchronizing signal separating stage and a horizontal synchronizing circuit which are implemented and arranged in such a way that in the presence of a switching criterion which is satisfied when a selectable number of horizontal synchronizing pulses per picture line is exceeded or when no horizontal pulse per picture line occurs, the horizontal synchronizing circuit is switched to a fixed rated frequency after a first selectable number of picture lines and that, when the switching criterion is no longer satisfied, the horizontal synchronizing circuit is again switched to the synchronized state by means of the horizontal synchronizing pulses after a second selectable number of picture lines.

2. An arrangement as claimed in Claim 1, characterized in that the second selectable number of picture lines is the sum of the first selectable number of picture lines and that number of picture lines during which the switching criterion was still satisfied after a switch-over to the fixed rated frequency and after reaching the first selectable number of picture lines.

3. An arrangement as claimed in Claim 2, characterized in that the second selectable number is limited to a predeterminable maximum value.

4. An arrangement as claimed in any one of Claims 1 to 3, characterized in that the first selectable number is in the range from 25 to 35 picture lines.

5. An arrangement as claimed in Claim 3, characterized in that the maximum value is in the range from 50 to 70 picture lines.

6. An arrangement as claimed in any one of Claims 1 to 5, characterized in that the predeterminable number of horizontal synchronizing pulses per picture line, at which the switching criterion is satisfied when this number is exceeded, is in the range from 5 to 15.

7. An arrangement as claimed in any one of Claims 1 to 6, characterized in that the arrangement comprises a first counter (1) which counts the number of horizontal synchronizing pulses per picture line and, when the switching criterion is satisfied, applies a corresponding signal to a second counter (12) which is clocked by the output signal of the phase-locked loop and, when the switching criterion is satisfied, counts the picture lines starting from an initial position and when the first selectable number of picture lines is reached, triggers the change-over of the horizontal synchronizing circuit to the rated frequency.

8. An arrangement as claimed in Claim 3 and in Claim 7, characterized in that the second counter (12) counts only to the maximum value.

9. An arrangement as claimed in Claim 7 and in Claim 8, characterized in that the second counter (12) counts back to its initial position again when the switching criterion is no longer satisfied and triggers the feedback of the horizontal synchronizing pulses to the horizontal synchronizing circuit when this initial position is reached.

## Revendications

1. Dispositif de synchronisation pour un appareil de reproduction d'images comprenant un étage de séparation de signaux synchrones, dans lequel des impulsions de synchronisation horizontale sont extraites d'un signal de télévision contenant un mélange de synchronisation horizontale acheminé au dispositif de synchronisation, et un circuit de synchronisation horizontale, auquel des impulsions de synchronisation horizontale sont acheminées à des fins de synchronisation, caractérisé en ce que le dispositif de synchronisation comporte un étage de séparation de signaux synchrones et un circuit de synchronisation horizontale qui sont conçus et agencés, de telle sorte que, en présence d'un critère de commutation qui est satisfait lorsqu'un nombre sélectionnable d'impulsions de synchronisation horizontale par ligne d'image est dépassé ou qu'aucune impulsion de synchronisation horizontale par ligne d'image n'apparaît, le circuit de synchronisation horizontale est commuté, après un premier nombre sélectionnable de lignes d'image, sur une fréquence nominale fixe et que, lorsque le critère de commutation n'est plus satisfait, le circuit de synchronisation horizontale est renvoyé, après un deuxième nombre sélectionnable de lignes d'image, vers un mode de synchronisation au moyen des impulsions de synchronisation horizontale.

2. Dispositif selon la revendication 1, caractérisé en ce que le deuxième nombre sélectionnable de lignes d'image est la somme du premier nombre sélectionnable de lignes d'image et du nombre de lignes d'image pendant lequel, après commutation sur la fréquence nominale fixe et après que le premier nombre sélectionnable de lignes d'image a été atteint, le critère de commutation était encore éventuellement satisfait.

3. Dispositif selon la revendication 2, caractérisé en ce que le deuxième nombre sélectionnable est limité à une valeur maximum prédéterminable.

4. Dispositif selon l'une quelconque des revendications 1 à 3, caractérisé en ce que le premier nombre sélectionnable se situe dans le domaine de 25 à 35 lignes d'image.

5. Dispositif selon la revendication 3, caractérisé en ce que la valeur maximum se situe dans le domaine de 50 à 70 lignes d'image.

6. Dispositif selon l'une quelconque des revendications 1 à 5, caractérisé en ce que le nombre prédéterminable d'impulsions horizontales par ligne d'image, lors du dépassement duquel le critère de commutation est satisfait, se situe dans le domaine de 5 à 15.

7. Dispositif selon l'une quelconque des revendications 1 à 6, caractérisé en ce que le dispositif comporte un premier compteur (1), qui compte le nombre d'impulsions de synchronisation horizontale par ligne d'image et qui, lorsque le critère de commutation est satisfait, délivre un signal correspondant à un deuxième compteur (12) cadencé par le signal de sortie du circuit d'asservissement de phase, qui, lorsque le critère de commutation est satisfait, compte les lignes d'image à partir d'une position de départ, et, lorsque le premier nombre sélectionnable de lignes d'image est atteint, déclenche la commutation du circuit de synchronisation horizontale sur la fréquence nominale.

8. Dispositif selon les revendications 3 et 7, caractérisé en ce que le deuxième compteur (12) ne compte que jusqu'à la valeur maximale.

9. Dispositif selon les revendications 7 et 8, caractérisé en ce que le deuxième compteur (12), lorsque le critère de commutation n'est plus satisfait, décompte à nouveau jusqu'à sa position de départ et, lorsque celle-ci est atteinte, déclenche le retour des impulsions de synchronisation horizontale sur le circuit de synchronisation horizontale.
